(19) Europäisches Patentamt
European Patent Office
Office européen des brevets

(11) **EP 2 739 105 B1**

(12) **EUROPEAN PATENT SPECIFICATION**

(45) Date of publication and mention
of the grant of the patent:
**12.02.2020  Bulletin 2020/07**

(51) Int Cl.:
*H04W 72/04* (2009.01)    *H04W 72/12* (2009.01)

(21) Application number: **12306497.4**

(22) Date of filing: **30.11.2012**

(54) **Apparatus, method, and computer program for a central unit of a base station transceiver**

Vorrichtung, Verfahren und Computerprogrammprodukt für eine zentrale Einheit eines Basisstations-Sender-Empfängers

Appareil, procédé et programme informatique pour une unité centrale d'un émetteur-récepteur de station de base

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.06.2014  Bulletin 2014/23**

(73) Proprietor: **Alcatel Lucent**
**91620 Nozay (FR)**

(72) Inventors:
• **Schaich, Frank**
**70469 Stuttgart (DE)**

• **Doetsch, Uwe**
**74392 Freudental (DE)**

(74) Representative: **Browne, Robin Forsythe et al**
**Hepworth Browne**
**15 St Paul's Street**
**Leeds LS1 2JG (GB)**

(56) References cited:
**WO-A1-2010/075864    WO-A1-2012/130272
US-A1- 2012 236 774**

EP 2 739 105 B1

**Description**

Embodiments of the present invention relate to mobile communications, more particularly but not exclusively to mobile communication networks using remote units and central units as distributed base station transceivers.

Background

Demands for higher data rates for mobile services are steadily increasing. At the same time modern mobile communication systems as 3rd Generation systems (3G) and 4th Generation systems (4G) provide enhanced technologies, which enable higher spectral efficiencies and allow for higher data rates and cell capacities. The mobile communication infrastructure becomes more and more dense. The conventional base station transceiver in wireless communication systems like the Universal Mobile Telecommunication System (UMTS) and Long Term Evolution (LTE) system can be split in two separate units, a Remote Unit (RU), which is also referred to as Remote Radio Head (RRH), and a Central Unit (CU), connected using electrical or optical links through a backhaul network.

The RU comprises a Radio Frequency (RF) frontend, i.e. analog transmit and receive RF components. For the UpLink (UL) path the RU comprises a receive antenna, which can be reused as transmit antenna for the DownLink (DL) path. Moreover, in the UpLink path the RU comprises filters corresponding to the UpLink bandwidth and frequency as well as a Low Noise Amplifier (LNA). In the DownLink path, the respective DownLink filters are comprised together with a Power Amplifier (PA) and a transmit antenna, which can be identical with the receive antenna of the UpLink path.

Conventional mobile communication systems make use of circuit switched and packet switched data. While for circuit switched data transmission radio resources are permanently reserved in a connection oriented manner, packet data transmission makes use of scheduling, i.e. radio resources are assigned non-permanently in a connection less manner. The procedure of assigning radio resources to certain users for packet data transmission is also referred to as scheduling. The entity carrying out scheduling is also called a scheduler.

At the same time data services become more and more diverse. In other words, the diversity of the Quality of Service (QoS) requirements is steadily growing. While modern mobile terminals use applications which generate background traffic, i.e. packet switched traffic of rather low amounts, which may or may not be delay sensitive, other applications such as voice and video services generate large amounts of data with high QoS demands

Patent document US2012/0236774 discloses a resource management unit configured to communicate with a plurality of radio units over a transport network.

Summary

It is a finding that communication networks tend to be implemented as shared networks. For example, centralized processing units or central units are connected to multiple remote units. Comparing to conventional networks, a base station transceiver is then composed of a remote unit and a central unit, where one central unit may carry out processing for multiple conventional base station transceivers or remote units. The communication link or the connection between the central unit and the multiple remote units can, for example, be implemented using optical fibers. On such a link traffic or data for multiple remote units and multiple base station transceivers may be transported. In other words, such a communication link can be shared between multiple remote units or multiple cells of the network.

It is a finding that the transport of multiple time varying traffic flows from/to various network nodes on a shared network may open the door to harvest on statistical multiplexing gains. For example, the backhauling of wireless base stations from a central point or unit to use respective remote units can benefit from statistical multiplexing. In other words, it is a finding, that such networks can be under-dimensioned with respect to the overall available transmission or reception resources, where the under-dimensioning can be compensated using statistical multiplexing gains.

It is a further finding that even sporadic traffic overflows may be tolerated when the respective communication modules make use of scheduling taking advantage of statistical multiplexing and delay tolerant transmissions or receptions.

It is a further finding that traffic overflows can be avoided by the network when the network is dimensioned according to the sum of the peak rates of single leaves or end nodes in a network wasting possible gains through statistical multiplexing. Moreover, if the network is under-dimensioned to harvest on multiplexing gains, occasional outages may occur, which may degrade the throughput of the wireless subsystem. It is a further finding that a trade-off can be found between efficient use of backhaul capacity and low probability for an impact on the wireless data throughput.

It is a further finding of embodiments that the central unit in a distributed architecture of a base station transceiver can provide basic boundary conditions regarding the available backhaul capacity per transmission interval for each connected cell or remote unit depending on latency, data rate and timing jitter requirements to the scheduler. In other words, especially in Centralized Radio Access Network (CRAN) architecture with layer 2 centralization, i.e. the layer 2 protocol, as, for example, the Medium Access Control (MAC), is centralized in processing entities. That is to say that in embodiments scheduling decisions can be carried out at the central unit while further processing, such as physical or layer 1 processing may be carried out at the central unit or at the remote unit. Moreover, in both cases, i.e. in the UL and in the DL, the schedulers can be located at the central unit.

It is a further finding that in this way, the central node or central unit can be made fully aware of the upcoming traffic in the DL and/or the UL within the range of a transmission interval, for example, a single time transmission interval, and also of the forecast for the expected traffic in the near future, i.e. several transmission intervals or TTIs for all connected cells or remote units. Furthermore, it is a finding that each scheduler can be enabled to shape the required rate on the backhauling link by the scheduling process itself, for example, a decision to shift a 64-Quadrature-Amplitude-Modulation (64QAM) user by a single TTI and schedule a Quaternary-Phase-Shift-Keying (QPSK) user instead which reduces the required rate accordingly and vice versa. In some embodiments only user data, i.e. new transmission in the UL and all transmissions, including the Hybrid Automatic Repeat Request (HARQ) retransmissions may be shifted in this way in the DL. Some control data, especially when it is common control data or broadcast data, may not be shifted, since mobile transceivers may expect or even transmit such data at predetermined transmission intervals. Embodiments may provide the advantage that loss of precious air resources may be reduced or avoided through the intended under-dimensioning of the backhauling network. In some embodiments the scheduling processes of all cells may be controlled to some extent not to exceed the available capacity of the backhauling link.

Embodiments may take advantage of the collocation of the schedulers for the wireless links and the feeding network.

Embodiments provide an apparatus for a central unit of one or more base station transceivers of a mobile communication system. In other words embodiments may provide said apparatus to be operated or included in a central unit. In the following the apparatus will also be referred to as central unit apparatus. Embodiments may also provide a central unit, which comprises the central unit apparatus. The central unit apparatus can be part of one or more base station transceivers of a mobile communication system. A base station transceiver comprises the central unit and the remote unit. In other words, in embodiments a distributed architecture is assumed, wherein a base station transceiver is split into a central unit and a remote unit. The remote unit comprises radio frequency components and is located at a different location than the central unit.

The apparatus may hence be part of a mobile communication system. The mobile communication system may, for example, correspond to one of the mobile communication systems standardized by the 3$^{rd}$ Generation Partnership Project (3GPP), as Global System for Mobile Communications (GSM), Enhanced Data rates for GSM Evolution (EDGE), GSM EDGE Radio Access Network (GERAN), High Speed Packet Access (HSPA), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms mobile communication system and mobile communication network are used synonymously.

The mobile communication system may comprise a plurality of transmission points or base station transceivers operable to communicate radio signals with a mobile transceiver. In embodiments, the mobile communication system may comprise mobile transceivers and base station transceivers, which are composed of one or more central units and one or more remote units. A mobile transceiver may correspond to a smartphone, a cell phone, User Equipment (UE), a laptop, a notebook, a personal computer, a Personal Digital Assistant (PDA), a Universal Serial Bus (USB) -stick, a car, etc. A mobile transceiver or terminal may also be referred to as UE or user in line with the 3GPP terminology. A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission and reception of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, etc.

The mobile communication system may thus be cellular. The term cell refers to a coverage area of radio services provided by a transmission point, a remote unit, a remote head, a remote radio head, a base station transceiver or a NodeB, an eNodeB, respectively. In some embodiments a cell may correspond to a sector. For example, sectors can be achieved using sector antennas, which provide a characteristic for covering an angular section around a base station transceiver or remote unit. In some embodiments, a base station transceiver or remote unit may, for example, operate three or six cells covering sectors of 120° (in case of three cells), 60° (in case of six cells) respectively. A mobile transceiver can be registered or associated with a cell, i.e. it can be associated to a cell such that data can be exchanged between the network and the mobile in the coverage area of the associated cell using a dedicated channel, link or connection.

The central unit apparatus comprises a communication module, which is operable to communicate with the remote unit using a communication link with a limited capacity. The communication module may correspond to any means for communicating, for example, one or more devices operable to communicate, one or more units operable to communicate, multiple modules operable to communicate, etc. In some embodiments the communication module may correspond to an interface through which the central unit apparatus can communicate with a remote unit. Such communication between the central unit apparatus and the remote unit may correspond to transmitting data from the central unit apparatus to the remote unit and/or receiving data at the central unit apparatus from the remote unit. Hence the communication link between the central unit apparatus and the remote unit may correspond to an electrical link, an optical link, or in some embodiments even a radio link. In some embodiments the communication module can be operable to establish a Common Public Radio Interface (CPRI), which uses optical fibers for said communication. In embodiments the communication module can be operable to communicate in a packet-switched manner. Hence, the load generated on the communication link or the bandwidth consumed from the communication link may depend on the actual data amount to be transmitted. In embodiments the communication module can be operable to execute according communication protocols. The communication module may correspond to software, which is executed on accordingly adapted hardware, such as a processor, a Digital Signal Processor (DSP), a multipurpose processor, etc., which comprises accordingly adapted Input/Output (I/O) ports or registers operable to communicate with the remote unit.

In embodiments communication on the communication link and the according implementation of the communication module may depend on the system architecture, in particular on how the different protocols and protocol tasks of the communication system are assigned between the central unit and the remote unit. For example, time domain Inphase and Quadrature component (IQ) samples can be exchanged between a remote unit and baseband processing located at the central unit. In other words, base band processing may be carried out at the remote unit in order to determine the IQ samples in the uplink and processing in order to create the actual radio signals from the IQ samples in the downlink. In case of Orthogonal Frequency Division Multiple Access (OFDMA) the steps can comprise Forward Error Correction (FEC), Quadrature Amplitude Modulation (QAM), symbol mapping, layer mapping, precoding, power scaling, Orthogonal Frequency Division Multiplex (OFDM) symbol/subcarrier mapping, Inverse Fast Fourier Transform (IFFT), Cyclic Prefix (CP) insertion.

In embodiments multiplexing and demultiplexing operations may be carried out at the remote unit or at the central unit. In other words receive signals in the uplink may be demultiplexed at the remote unit and transmit signals for the downlink may be multiplexed at the remote unit. The remote unit may then provide demultiplexed uplink signals to the central unit using the communication link. The demultiplexed signals may correspond to demultiplexed user signals, demultiplexed radio bearers, physical channels, transport channels, logical channels, etc. In the downlink the central unit may provide accordingly demultiplexed signals to be multiplexed to the remote unit. In some embodiments the multiplexing and/or demultiplexing of uplink and downlink signals may be carried out at the remote unit, while being controlled by the central unit. These different options may affect the communication on the communication link between the central unit and the remote unit and the communication module can be accordingly adapted. More details on the different architectures can be found in EP11306097.4.The central unit apparatus further comprises a scheduler module which is operable to schedule data transmissions to and/or from a mobile transceiver via the remote unit. The scheduler module may correspond to any means for scheduling, such as a scheduler, a computer program which is executed on accordingly adapted hardware, such as a DSP, a processor, a multi-purpose processor, etc. The scheduler module may be implemented using one or more modules, one or more devices, or one or more scheduling units. The scheduler module can be operable to assign communication resources to the mobile transceiver. Such communication resources may correspond to radio resources such as frequencies, carrier frequencies, sub-carriers, and/or time resources as for example Time Transmission Intervals (TTIs), radio frames, sub frames, slots, symbols, etc. Moreover the scheduler module may assign spatial resources such as antennas, beams, spatially multiplex channels, pre-coding vectors, etc. to a mobile transceiver for communicating with the remote unit.

The communication between the mobile transceiver and the remote unit can be in the UL, i.e. from the mobile transceiver to the remote unit, and/or in the DL, i.e. from the remote unit to the mobile transceiver. In other words the scheduler module administers or assigns resources, which are used on the air interface between the remote unit and the mobile transceiver for communicating packet switched data between the remote unit and the mobile transceiver on the air interface. With the given architecture these resources also affect the resources, which are used on the communication link. The resources on the communication link, which are used to communicate between the remote unit and the central unit apparatus, may correspond to portions from a limited rate capacity, e.g. subcarriers from an OFDM-scheme used to communicate on the communication link, etc. In embodiments the scheduler module may not directly assign the resources on the communication link to schedule data transmissions but may make use of the communication module. Hence in embodiments the communication module and the scheduler module are coupled to each other.

The communication module may manage the communication on the communication link with the remote unit. In other words, the scheduler may schedule the resources for data transmission between the remote unit and the mobile transceiver while the communication module may map or assign according resources on the communication link in order to transport the scheduled data transmissions between the remote unit and the central unit. The scheduler module is further operable to base the scheduling of the data transmissions on the limited capacity of the communication link between the central unit and the remote unit. In other words, the scheduler module is operable or adapted to take into account the limited capacity of the communication link between the central unit and the remote unit. Embodiments may therefore provide the advantage that the scheduler already considers the underlying transmission capacities of the system, such that data transmissions can be adapted to the data transport capacities of the infrastructure of the system. Therewith, more efficient use may be made of the infrastructure of the system.

In some embodiments the central unit can be coupled to at least two remote units using the communication link. In other words, one central unit can be coupled to multiple remote units establishing one or more base station transceivers. As the architecture of such a base station transceiver is split up into the central unit and a remote unit, a combination of one central unit and multiple remote units may establish multiple base station transceivers. In other embodiments multiple remote units may be coupled to a single central unit establishing only a single base station transceiver potentially operating multiple cells of the mobile communication system. The capacity of the communication link may be shared between multiple remote units and one or more central units. That is to say, the communication module is operable to communicate with the at least two remote units using the communication link with the limited capacity. Embodiments may therewith provide the advantage that the central unit apparatus may schedule data transmissions to multiple remote units such that the limited capacity of the communication link is taken into account and may be exploited. Hence, more efficient use may be made of the communication link in that overloads are reduced or even avoided in the first place through the scheduling decisions.

In embodiments the scheduler module may comprise at least two scheduling units for scheduling the at least two remote units. That is to say that in embodiments the scheduler module may have separate scheduling units for separate remote units. The scheduling units may or may not be coupled to each other. In other words the scheduling of the multiple remote units may not be carried out jointly, i.e. one scheduling unit may schedule data transmissions for one or more remote units and may not be aware of the scheduling decisions made by another scheduling unit for one or more other remote units. Embodiments may therefore provide the advantage that although independent scheduling is carried out for different remote units, the limited capacity of the communication link between the central unit and the remote units is still taken into account. This may be realized by a controlling entity, assigning maximum data rates to the independent scheduling units, which will be detailed subsequently. In other embodiments joint scheduling can be carried out, i.e. one entity, such as one processor, may establish the scheduling module, which is in charge for the scheduling decisions of multiple or at least two remote units. The limited capacity on the communication link may then be taken into account considering the overall data rate of the respective data transmissions to the at least two remote units.

In embodiments the data transmissions can be organized in repetitive transmission intervals. Such transmission intervals may correspond to Time Transmission Intervals (TTIs), radio frames, radio sub frames, slots, symbols, etc. In embodiments each of the at least two scheduling units can be operable to generate different traffic rates during different transmission intervals such that the sum traffic rate of the at least two scheduling units is equal or less than the capacity of the transmission link. In other words, each of the scheduling units may generate certain traffic on the communication link by scheduling data transmissions. Each of the scheduling units may take a traffic limit into account, when deciding on the data transmission of a transmission interval. In simple words the data amount on the communication link, which can be transmitted per transmission interval, may be limited. In embodiments, the limitation for the individual scheduling units may be varied over time, i.e. it may be different for different transmission intervals. For example, in a first transmission interval the limit of a first scheduling unit may be lower than the limit of a second scheduling unit, while in a second subsequent transmission interval the limit of the first scheduling unit may be higher than that of the second scheduling unit.

In some embodiments the sum of the limits of the first and the second scheduling unit may be constant. Embodiments may therewith provide the advantage that each of the scheduling units may have transmission intervals with a higher capacity or a higher limit while during other transmission intervals the traffic limits may be lower. Therewith, the traffic generated per scheduling unit may be controlled, such that the capacity of the transmission link is not exceeded. Embodiments may therewith provide a mechanism to control the overall capacity of the transmission link through the scheduling module.

In some embodiments the at least two scheduling units can be operable to generate the different traffic rates based on a traffic rate pattern, which is based on a predetermined load characteristic at the at least two remote units. Coming back to the above example, the first scheduling unit may be located at a shopping center, where during the opening hours, i.e. during the day, higher traffic loads are to be expected than during the night. Correspondingly, for this scheduling unit a high traffic limit may be configured or predetermined during the day, while a lower limit may be configured during the night. The second scheduling unit may be located in a residential area, where higher traffic is to be expected during the evening and the night, while lower traffic is to be expected during the day. The limits for the second scheduling unit may therewith be set to the opposite of the ones of the first scheduling units. In other words for the second scheduling unit the traffic limit may be lower during the day and higher during the evening and night. Embodiments may therewith provide the advantage that the individual scheduling units may take into account the load characteristics or the traffic that is generated in their coverage area, which allows adaptation of the traffic and more efficient use of the communication link without generating overloads. Embodiments may therewith enable the generation of a multiplexing gain on the

5

communication link, which in turn allows dimensioning the communication link with a lower capacity.

In further embodiments the scheduler module can be operable to adapt a transmission capacity in a transmission interval by shifting one or more data transmissions between transmission intervals. For example, if during a certain transmission interval the traffic occurrence, i.e. the amount of data to be transmitted, is higher than a traffic limit set for this transmission interval, the scheduler module may delay some of the data transmissions to a later transmission interval in order to lower the traffic amount in the current transmission interval. This may be enabled by the scheduler module further comprising a buffer or queue, for example in terms of a memory, which allows the scheduling module to take into account future data transmissions as well. The scheduler module may therewith provide the advantage that the variations in data rates generated by the occurring loads can be reduced, again enabling a more robust or efficient use of the communication link. In some embodiments the scheduler module can be operable to base the shifting on the one or more data transmissions between the transmission intervals further on a Quality of Service (QoS) target of the one or more data transmissions.

In other words, the data transmissions, which are scheduled by the scheduler module may carry data for different services. The different services may, for example, correspond to background services, which are delay tolerant. For example, such a service may correspond to an email client, i.e. a client that frequently checks a mail box whether new emails have arrived or not. If new emails are found these are downloaded to the mobile transceiver. However, this service has some delay tolerance, at least when compared to real time services such as voice or video services. The scheduler module may then be operable to delay data transmissions for the email client in order to reduce the data amount of a certain transmission interval. The service as experienced by the user of the mobile transceiver may therewith not be degraded significantly, as some delay when receiving an email is well expected and tolerated. Embodiments may therewith provide the advantage that the traffic variations may be reduced by the scheduler without reducing the grade of service for a user.

In further embodiments the scheduler module may be operable to shift data transmissions of payload data between transmission intervals while leaving data transmissions of control and/or broadcast data non-shifted. In other words, some of the data transmissions, which are scheduled, carry control data, which is expected to be transmitted in certain transmission intervals. These transmission intervals may be predetermined, for example, by a system's specification or a standard or a certain service provided to one or more users. Hence while the scheduler module may be operable to adapt or shift payload transmissions for a mobile transceiver within transmission intervals, it may leave such control and/or broadcast data non-shifted, i.e. it may transmit control and/or broadcast data in the predetermined transmission intervals. Other control data, such as control data telling a certain mobile transceiver, which resources should be used to receive certain payload data or which radio resources should be used to transmit certain payload data may shifted along with the respective payload data. In other words, the scheduling module may be operable to consider that certain control data is associated with certain payload data transmissions and may accordingly shift the control data with the payload data transmissions. Embodiments may therewith provide the advantage that although the scheduler module is adapted to rearrange certain data transmissions among transmission intervals, the system may still be viable and enabled to provide different services, as a certain control and/or broadcast data is not shifted.

In some embodiments the central unit apparatus may further comprise a controller module, which is operable to control the at least two scheduling units based on the limited capacity of the communication link. In other words, in some embodiments the central unit apparatus may comprise a controller, which tells the respective scheduling units on individual data rate limits, such that the limited capacity of the communication link is not exceeded. In embodiments the controller module may correspond to any means for controlling, such as a controller, a processor, a DSP, a multipurpose processor, etc. Hence the controller module may as well be implemented as software, which is executed on accordingly adapted hardware. The controller module may correspond to one or more modules, one or more devices, or one or more units. Embodiments may therefore provide the advantage that there is an entity, which monitors the limited capacity of the communication link and assigns respective limitations to the scheduling units, such that the capacity of the communication link is not exceeded.

Therewith, embodiments may provide the advantage that one entity can be used to monitor a large number of scheduling units, which all use or share the communication link. Embodiments may further provide the advantage that the controller module can be used to operate a large number of scheduling units, i.e. to control a wide average area of the mobile communication system. Coming back to the above example, the controller module may then shift individual limits of the scheduling units such that at the shopping center a higher capacity is available during the day than during the night and vice versa for the residential area. Embodiments can therewith provide the advantage that the controller module may coordinate the capacity of the individual scheduling units, such that the individual capacity is adapted to respective needs in the network. In other embodiments the controller module can be operable to adaptively change the limits of the individual scheduling units based on the load statistics in the network. For example, if a scheduling unit approaches its limit, the limit may be reconfigured to be higher than before, while another capacity limit of another scheduling unit, which is not close to its limit, is configured to a lower limit. Therewith, transmission resources on the communication link can be dynamically adapted to the load in the network.

In other embodiments the controller module can be operable to assign a basic capacity from the capacity of the communication link to each of the at least two scheduling units. In other words the controller module is operable to provide a certain limit to each of the scheduling units. Moreover, the controller module can be operable to reserve an excess capacity from the capacity of the communication link. That is to say that the controller module may not assign or distribute or share the full capacity of the communication link among the scheduling units but may keep some capacity as a reserve. Each of the at least two scheduling units may then be operable to adapt the transmission capacity in a transmission interval to the basic capacity, which was assigned by the controller module. If the basic capacity would lead to service degradations for a certain scheduling unit, the controller module can be operable to further assign extra capacity from the excess capacity to the degraded scheduling unit. In further embodiments the scheduling module or unit can be operable to adapt the transmission capacity in a transmission interval by shifting one or more data transmissions between a current and a subsequent transmission interval as it was described above.

In such an embodiment the controller module can be operable to assign at least a part of the excess capacity to a scheduling unit when the capacity of the communication link is to be exceeded by the scheduling unit in the current transmission interval. That is to say, each of the individual scheduling units may optimize its generated traffic by shifting data transmissions between transmission intervals as far as possible. On top of that, the controller module may assign extra capacity from the reserved excess capacity, when a scheduling unit does not manage to succeed with its data transmissions based on a basic capacity. Embodiments may therewith provide the advantage that resource coordination on the communication link can be carried out in an efficient manner.

In further embodiments the scheduler module can be operable to schedule first data transmissions and second data transmissions. The first data transmissions may use a modulation scheme transmitting more information per modulation symbol than the second data transmissions. In other words, the scheduler may schedule certain data packets for a transmission to and/or from a mobile transceiver using different modulation schemes. The selection of the modulation scheme may then determine how much information, for example how many bits, can be transported per modulation symbol. However, the more information is transported per modulation symbol the higher the resource utilization on the communication link between the central unit and the remote unit. The first data transmissions hence use a modulation scheme transmitting more information per modulation symbol than the second data transmissions on the communication link. The scheduler module can then be further operable to exchange a first data transmission from a current transmission interval with a second data transmission from a later interval when the capacity of the communication link is exceeded in the current transmission interval. That is to say that more resource intense data transmissions may be scheduled in later transmission intervals when the capacity on the communication link is currently critical.

Correspondingly, the scheduler module can be further operable to exchange a second data transmission from a current transmission interval with a first data transmission from the later interval when there is free capacity on the communication link in the current transmission interval. In some embodiments the first data transmissions may correspond to 64-Quadrature-Amplitude-Modulation (64QAM) and the second data transmissions may correspond to Quaternary-Phase-Shift-Keying (QPSK) modulation. Embodiments may therewith provide the advantage that scheduling of data transmissions can be adapted to modulation schemes of the data transmissions on the air interface, and therewith to the resource utilization on the communication link between the remote unit and the central unit.

Embodiments further provide a method for a central unit of one or more base station transceivers of a mobile communication system. The base station transceiver comprises the central unit and the remote unit. The method comprises communicating with the remote unit using a communication link with a limited capacity. The method further comprises scheduling data transmissions to and/or from a mobile transceiver via the remote unit. The scheduling is based on the limited capacity of the communication link between the central unit and the remote unit.

Embodiments further provide a computer program having a program code for performing one of the above methods, when the computer program is executed on a computer or processor. The invention is defined by the claims.

Brief Description of the Figures

Some other features or aspects will be described using the following non-limiting embodiments of apparatuses and/or methods and/or computer programs by way of example only, and with reference to the accompanying Figures, in which

Fig. 1 illustrates an embodiment of a central unit apparatus;

Fig. 2 illustrates another embodiment of a central unit apparatus connected to multiple remote units;

Fig. 3 illustrates an embodiment of a central unit apparatus with multiple scheduling units;

Fig. 4 illustrates a probability density distribution of an instantaneous rate of a base station;

Fig. 5 illustrates accumulated distributed functions for a normalized sum rate for different numbers of base stations; and

Fig. 6 shows a block diagram of an embodiment of a method for a transmitter.

Description of Some Embodiments

Various embodiments will now be described in more detail with reference to the accompanying drawings. In the Figures, the thicknesses of lines, layers and/or regions may be exaggerated for clarity.

Accordingly, while embodiments are capable of various modifications and alternative forms, embodiments thereof are shown by way of example in the Figures and will herein be described in detail. It should be understood, however, that there is no intent to limit embodiments to the particular forms disclosed, but on the contrary, embodiments are to cover all modifications, equivalents, and alternatives falling within the scope of the invention as defined by the claims. Like numbers refer to like or similar elements throughout the description of the Figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In the following description some components will be displayed in multiple Figures carrying the same reference signs, but may not be described multiple times in detail. A detailed description of a component may then apply to that component for all its occurrences.

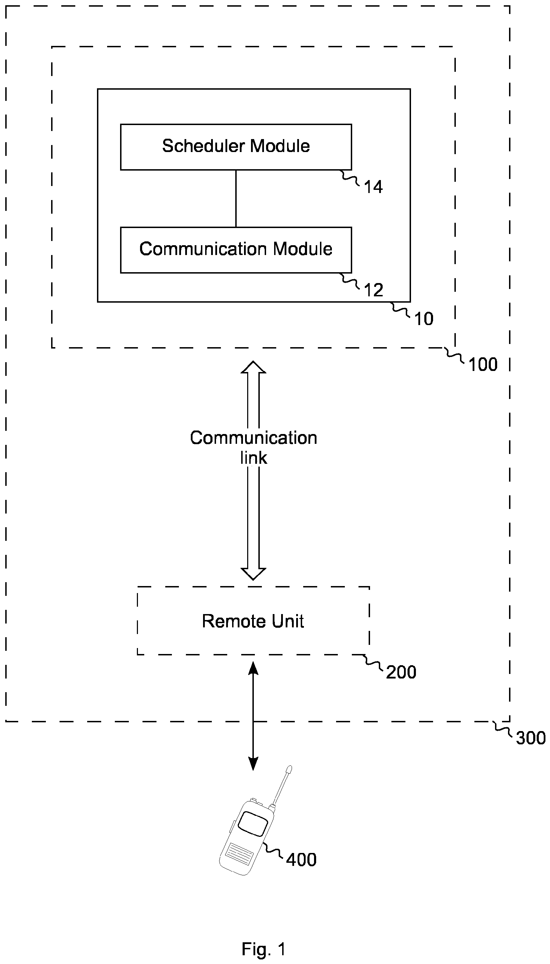

Fig. 1 shows an apparatus 10 for a central unit 100 of one or more base station transceivers 300 of a mobile communication system. The dotted lines in the following figures indicate optional components of further embodiments. In other words, embodiments may also provide a central unit 100 with the central unit apparatus 10, a base station transceiver 300 with the central unit 100 and the central unit apparatus 10, respectively. The base station transceiver 300 comprises the central unit 100 and the remote unit 200. The central unit apparatus 10 comprises a communication module 12, which is operable to communicate with the remote unit 200 using a communication link with a limited capacity. The central unit apparatus 10 further comprises a scheduler module 14 operable to schedule data transmissions to and/or from a mobile transceiver via the remote unit 200, wherein the scheduler module 14 is operable to base the scheduling of data transmissions on the limited capacity of the communication link between the central unit 100 and the remote unit 200.

In the embodiment shown in Fig. 1 it is assumed that the central unit apparatus 10 is implemented at a centralized processing entity of an LTE mobile communication system. In other embodiments any other communication system can be assumed. Hence, the central unit apparatus 10 can be implemented by one or more processors, which execute according software. Moreover, it is assumed that the communication link is implemented using CPRI and optical fiber between the remote unit 200 and the central unit 100. In other embodiments any other implementation of the communication link, as e.g. load dependent packet switched communication, can be assumed. In line with the above an LTE air interface is assumed between the remote unit 200 and the mobile transceiver 400.

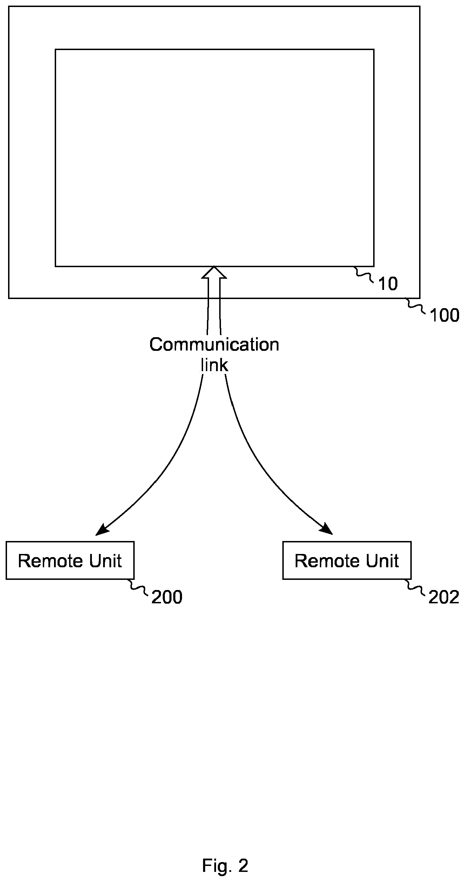

Fig. 2 shows another embodiment with the central unit apparatus 10 at the central unit 100. As shown in Fig. 2 the central unit 100 is coupled to two remote units 200 and 202. In the embodiment shown in Fig. 2 the two remote units 200 and 202 share the capacity of the communication link. In other words the central unit 100 is coupled to at least two remote units 200 and 202 using the communication link. The communication module 12, which is not shown in Fig. 2 for simplicity reasons, is operable to communicate with the at least two remote units 200 and 202 using the communication link with a limited capacity.

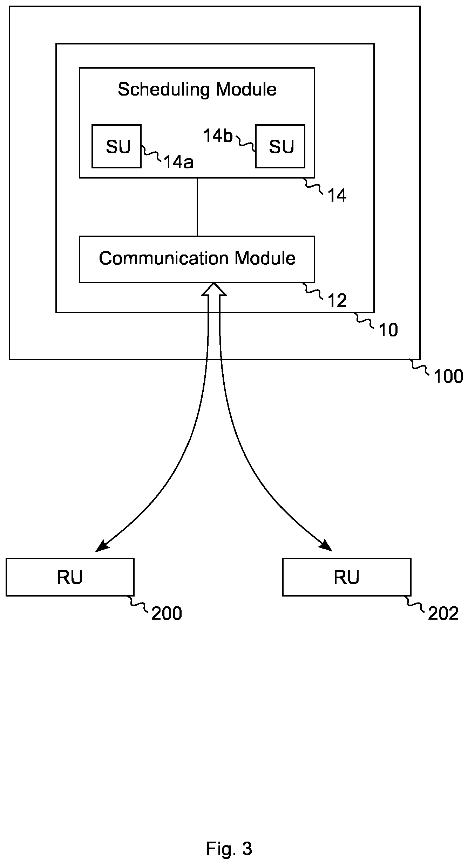

Fig. 3 shows yet another embodiment of the central unit 100 comprising the central unit apparatus 10. The central unit apparatus 10 comprises the communication module 12, which is coupled to the scheduling module 14. In the embodiment depicted in Fig. 3 the scheduling module 14 comprises two scheduling units 14a and 14b. The scheduler module 14 comprises at least two Scheduling Units (SU) 14a and 14b for scheduling at least two Remote Units (RU) 200 and 202. With the architecture shown in Fig. 3 multiple embodiments are conceivable. In some of the embodiments the scheduling units 14a and 14b are independent, i.e. one scheduling unit 14a does not have knowledge of the traffic generated by another scheduling unit 14b. In other embodiments the scheduling units 14a and 14b can be coupled, such that one scheduling unit 14a can be aware of the traffic generated by scheduling unit 14b.

In embodiments the data transmissions, which are scheduled by the scheduling module 14, the scheduling units 14a or 14b respectively, are organized in repetitive transmission intervals. In the embodiment considering the LTE communication network such a transmission interval may correspond to a TTI with duration of 1ms. Each of the at least two scheduling units 14a and 14b can then be operable to generate different traffic rates during different transmission intervals such that the sum traffic rate of the at least two scheduling units is equal or less than the capacity of the transmission link.

In the following, an example will be presented in order to further detail the data rates and traffic generation situation in embodiments. A tree-like or alternatively ring-based network feeding N nodes, for example, wireless base stations or remote units, is assumed. The instantaneous rate for each base station or remote unit can be assumed to be time varying, for example, depending on the user mix within the served cell. The rate, load, or traffic, generated by a base station or remote unit can be described by

$$R_{0,n} = R_{0,n}(t) \quad \forall n \in \left[1...N\right]. \tag{1}$$

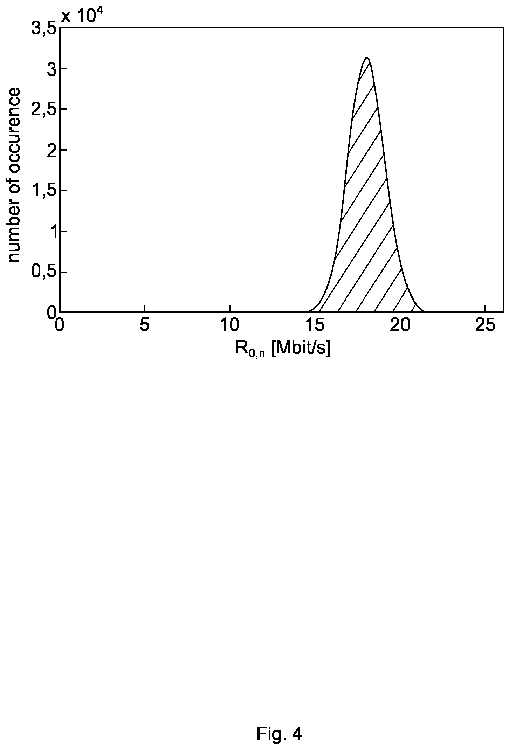

Fig. 4 depicts a probability density function (pdf) of the instantaneous rate of a wireless base station for a given scenario, i.e. the probability density distribution of the instantaneous rate, which is generated between a central unit 100 and a remote unit 200. Fig. 4 depicts the instantaneous rate $R_{0,n}$ in Mbit/s versus the number of occurrences of the respective rate. Fig. 4 depicts a representative histogram of $R_{0,n}$ for a single cell, which is assumed to be fully loaded. The network assumptions were an LTE network, with 10MHz bandwidth using one antenna stream and one sector and the viewgraph shown in Fig. 4 was generated using system level simulations. As can be seen from Fig. 4 the highest number of occurrences is around 18 Mbit/s and the highest rates range around 22 to 25 Mbit/s.

If the transmission resources of the network, i.e. of the communication link, are shared between the leave nodes, i.e. the remote units connected to a centralized central unit, the normalized sum rate on the network, i.e. on the communication link can be expressed as

$$R_{0,n} = \frac{1}{N}\sum_{n=1}^{N} R_{0,n} \ . \tag{2}$$

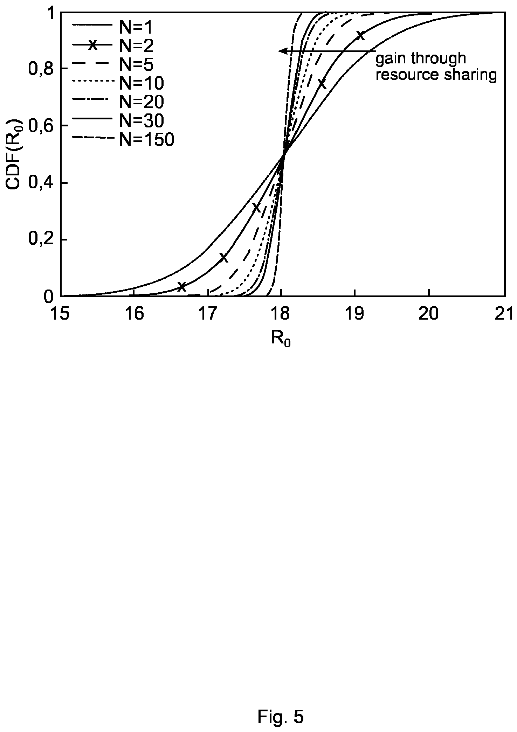

To visualize the potential gain of statistical multiplexing Fig. 5 depicts the Cumulated Distribution Functions (CDF) of $R_0$ for various $N$.

Fig. 5 shows the CDF of the normalized sum rate for various pool sizes $N \in \{1,2,5,10,20,30,150\}$, i.e. for various numbers $N$ of remote units connected to a central unit 100. As indicated in equation (2) the sum rate is normalized to the number of remote units. Fig. 5 shows the respective normalized sum rate $R_{0,n}$ versus the respective probability of the actually occurring rate being lower than $R_0$. As Fig. 5 shows with the growing number $N$ of remote units the variance of the CDF becomes smaller, i.e. the probability of an actually occurring rate being the average rate increases. Fig. 5 visualizes the potential gain of statistical multiplexing by depicting the CDFs of $R_0$ for various $N$. To harvest on these gains, in embodiments a CDF $(R_0)$ less than one, for example $R$ = [99.99%,99.999%] may be selected as a working point for the dimensioning of the network. It is to be noted that the respective peaks

$$CDF(R_0) = 1 \rightarrow R_0 = R_{\max} \tag{3}$$

are independent from $N$. In other words, when the network is dimensioned based on the $CDF(R_0)$ < 1, outages do occur with a certain probability, i.e. a rate required to transport all the traffic generated by the remote units may exceed the available rate or capacity on the communication link. The probability of occurrence for these outages depends on the actually applied working point $R$, as, for example, $R$ at CDF $(R_0)$ = 0.9999 the outage probability would correspond to 0.01%. Embodiments may however avoid these outages, while still harvesting on the gains of statistical multiplexing. In the following multiple embodiments will be described taking advantage of statistical multiplexing while decreasing the outage probability.

In the following embodiments a Centralized Radio Access Network (CRAN) will be discussed. A CRAN is a promising evolution of today's radio networks. Various degrees of centralization are possible, such as full centralization and transport of CPRI signals on one side and conventional Internet Protocol (IP) backhauling on the other side are the extreme cases. In the following the communication link corresponds to optical fibers operable to transport the CPRI signals. The scheduling module 14, the scheduling units 14a and 14b, respectively, are operable to carry out user scheduling/link adaptation centrally at the central unit 100. The following sum constraint can be used to express the limitation of the overall scheduling/link adaptation process:

$$\sum_{n=1}^{N} R_{0,n} \overset{!}{\leq} R .\qquad\qquad (4)$$

That is to say the functionalities of the individual schedulers or scheduling units 14a and 14b can be connected to an extent that this constraint is always met. In other words each of the at least two scheduling units 14a and 14b is operable to generate different traffic rates during different transmission intervals such that the sum traffic rate of the at least two scheduling units is equal or less than the capacity of the transmission link.

Embodiments may therewith provide the advantage that the required rate never exceeds the available rate, while statistical multiplexing gains can still be gathered. For example, MAC Packet Data Units (PDUs) are to be transported via the network, i.e. the communication link, together with the respective control information. Thus, the sum or overall rate on the network or communication link depends on the respective fractions of modulation and coding schemes, for example, the more allocations with higher order constellations are present within the actual TTI the higher the respective required rate on the network or communication link. So the central node or central unit 100 may make use of this degree of freedom to influence the required rate on the network or communication link.

In some embodiments each base station or remote unit 200 fed by the central note or unit 100 is allocated a base rate on the backhauling network. In other words the central unit apparatus may comprise a controller module, which is operable to control the at least two scheduling units 14a and 14b based on the limited capacity of the communication link. Moreover, as the data transmissions are organized in repetitive TTIs, the controller module is operable to assign a basic capacity or base rate from the capacity of the communication link to each of the at least two scheduling units 14a and 14b. Each of the at least two scheduling units may then be operable to use this base rate or basic capacity to schedule the respective users. In other words, when performing user or mobile transceiver scheduling, depending on the respective modulation and coding schemes the base rate is consumed by the scheduling units 14a and 14b. In some embodiments the scheduling process, which is carried out at the scheduling units 14a and 14b is to take the rate limitation into account by respective sequencing of user transmissions taking their respective latency tolerances into account, for example, by avoiding the accumulation of high rate users into a single sub frame. In other words each of the at least two scheduling units 14a and 14b can be operable to adapt a transmission capacity in a transmission interval by shifting one or more data transmissions between a current and a subsequent transmission interval.

The controller module can be operable to further reserve an excess capacity from the capacity of the communication link. If the base rate is exceeded the central note 100 may allocate additional resources to the respective scheduling process at the scheduling unit 14a or 14b. In other words, the controller module can be further operable to assign at least a part of the excess capacity to a scheduling unit 14a or 14b, when the capacity of the communication link is to be exceeded by the scheduling unit 14a or 14b in the current transmission interval. The allocation of excess bandwidth may be prioritized similarly depending on service types, user priority and/or traffic history.

In another embodiment the network can be dimensioned according to an exemplary working point R of for example 99.99%. Then for a given TTI half of the nodes receives resources according to 100% of the theoretical peak, while the remaining half receives resources corresponding to 99.98% or more generic: R-(100%-r) = 2R-100%. Thus the overall working point is met. Hence the scheduling units 14a and 14b transmit a different rate in different transmission intervals. Then, in the next time interval, in the present embodiment a time interval may correspond to a single TTI, the roles are interchanged. This way, there may be no need to implement a communication interface between the respective schedulers or scheduling units 14a or 14b. Instead, each single scheduler or scheduling unit 14a or 14b may automatically sequence the users accordingly.

That is to say that the scheduler module 14 is operable to adapt a transmission capacity in a transmission interval by shifting one or more data transmissions between transmission intervals. The scheduler module may be further operable to base the shifting of the one or more data transmissions between the transmission intervals further on a quality of service target of the one or more data transmissions, i.e. the delay tolerance of the different data transmissions may be considered. In some embodiments a number of subsequent TTIs may be considered for these shiftings or rearrangements of data transmissions. For example, the scheduler module 14 can be operable to carry out the shifting of the one or more data transmissions within a group of consecutive transmission intervals, such as a number of TTIs. As it has already been mentioned above, in some embodiments the scheduler module 14 can be operable to shift data transmissions of payload data between transmission intervals while leaving data transmissions of control and/or broadcast data non-shifted. The rate at which the nodes, i.e. the scheduling units 14a and 14b, may exchange their roles in some embodiments may be different. For example, they exchange their roles on a basis of a TTI, on a basis of a radio frame, a sub frame, etc. The principle of alternating rates between scheduling units or assigning different limitations to the scheduling units in different transmission intervals may be used at any working point.

In other embodiments based on history, i.e. long term measurements, some of the nodes may be allocated fewer resources semi-statically. With such measurements the central nodes or central unit 100 can be able to identify user behavior and cell characteristics, which may, for example, include cells covering office buildings, cells covering residential buildings, cells covering shopping areas, etc. Then, the allocation of rates on the network to the single nodes may follow the respective patterns, for example, cells with mainly shopping areas may experience load peaks at different times than cells covering residential areas. Overall, the working point can be met, while the single links may receive resources above average without a need of exchanging measurements with the costs of implementing a data base. In other words, the at least two scheduling units can be operable to generate the different traffic rates based on a traffic rate pattern, which is based on a predetermined load characteristic at the at least two remote units 14a and 14b.

Considering general application of embodiments to communication networks the scheduler module 14 can be operable to schedule first data transmissions and second data transmissions. In such generalized embodiments the first data transmissions use a modulation scheme transmitting more information per modulation symbol than the second data transmissions. The scheduler module 14 can be further operable to exchange a first data transmission from a current transmission interval with a second data transmission from a later interval when the capacity of the communication link is exceeded in the current transmission interval. Additionally or alternatively the scheduler module 14 can be further operable to exchange a second data transmission from the current transmission interval with the first data transmission from a later transmission interval when there is free capacity on the communication link in the current transmission interval.

In an LTE mobile communication network the first data transmissions may use 64 QAM and the second data transmissions may use QPSK modulation.

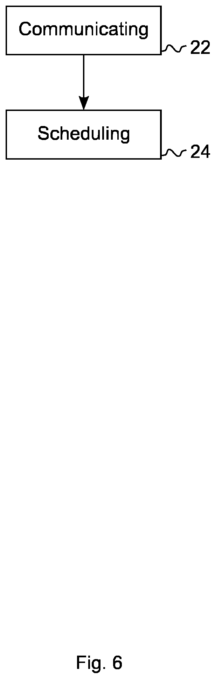

Fig. 6 illustrates a block diagram of a flow chart of an embodiment of a method for a central unit 100 of one or more base station transceivers 300 of a mobile communication system. The base station transceiver 300 comprises the central unit 100 and a remote unit 200. The method comprises a step of communicating 22 with the remote unit 200 using a communication link with a limited capacity. The method comprises a further step of scheduling 24 data transmissions to and/or from a mobile transceiver 400 via the remote unit 200, wherein the scheduling 24 is based on a limited capacity of the communication link between the central unit 100 and the remote unit 200.

Embodiments may provide the advantage that statistical multiplexing gain may be harvested reducing the CAPital EXpenditure (CAPEX) without introducing occasional outages. Overall embodiments may enable a more efficient communication network by reducing the overall cost of the network.

Embodiments further provide a computer program for performing one of the above described methods when a computer program is executed in a computer or processor programmable hardware component.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for scheduling", "means for communicating", "means for controlling", etc., may be provided through the use of dedicated hardware, such as "a scheduler", "a communicator", "a controller, etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An apparatus (10) for a central unit (100) of one or more base station transceivers (300) of a mobile communication system, the base station transceiver (300) comprising the central unit (100) and a remote unit (200), the central unit apparatus (10) comprising
   a communication module (12) operable to communicate with the remote unit (200) using a communication link with a limited capacity;
   a scheduler module (14) operable to schedule data transmissions to and/or from a mobile transceiver (400) via the remote unit (100), wherein the scheduler module (14) is operable to base scheduling of the data transmissions on the limited capacity of the communication link between the central unit (100) and the remote unit (200), wherein the communication module (12) is operable to communicate with at least two remote units (200; 202) using the communication link with the limited capacity, wherein the scheduler module (14) comprises at least two scheduling units (14a; 14b) for separately scheduling the at least two remote units (200; 202).

2. The apparatus (10) of claim 1, wherein the central unit (100) is coupled to at least two remote units (200;202) using the communication link.

3. The apparatus (10) of claim 1, wherein the data transmissions are organized in repetitive transmission intervals, wherein each of the at least two scheduling units (14a;14b) is operable to generate different traffic rates during different transmission intervals such that a sum traffic rate of the at least two scheduling units is equal or less than the capacity of the transmission link.

4. The apparatus (10) of claim 3, wherein the at least two scheduling units (14a;14b) are operable to generate the different traffic rates based on a traffic rate pattern, which is based on a predetermined load characteristic at the at least two remote units (14a;14b).

5. The apparatus (10) of claim 1, wherein the data transmissions are organized in repetitive transmission intervals and wherein the scheduler module (14) is operable to adapt a transmission capacity in a transmission interval by shifting one or more data transmissions between transmission intervals.

6. The apparatus (10) of claim 5, wherein the scheduler module (14) is operable to base the shifting of the one or more data transmissions between the transmission intervals further on a quality of service target of the one or more data transmissions.

7. The apparatus (10) of claim 5, wherein the scheduler module (14) is operable to carry out the shifting of the one or more data transmissions within a group of consecutive transmission intervals.

8. The apparatus (10) of claim 5, wherein the scheduler module (14) is operable to shift data transmissions of payload data between transmission intervals while leaving data transmissions of control and/or broadcast data non-shifted.

9. The apparatus (10) of claim 1, further comprising a controller module operable to control the at least two scheduling units (14a;14b) based on the limited capacity of the communication link.

10. The apparatus (10) of claim 9, wherein the data transmissions are organized in repetitive transmission intervals, wherein the controller module is operable to assign a basic capacity from the capacity of the communication link to each of the at least two scheduling units (14a;14b) and to reserve an excess capacity from the capacity of the communication link, wherein each of the at least two scheduling units (14a;14b) is operable to adapt a transmission capacity in a transmission interval by shifting one or more data transmissions between a current and a subsequent transmission interval, and wherein the controller module is further operable to assign at least a part of the excess capacity to a scheduling unit (14a;14b) when the capacity of the communication link is to be exceeded by the scheduling unit (14a;14b) in the current transmission interval.

11. The apparatus (10) of claim 1, wherein the data transmissions are organized in repetitive transmission intervals, wherein the scheduler module (14) is operable to schedule first data transmissions and second data transmissions, wherein the first data transmissions use a modulation scheme transmitting more information per modulation symbol than the second data transmissions, wherein the scheduler module (14) is further operable to exchange a first data transmission from a current transmission interval with a second data transmission from a later transmission interval when the capacity of the communication link is exceeded in the current transmission interval, or wherein the scheduler module (14) is further operable to exchange a second data transmission from a current transmission interval with a first data transmission from a later transmission interval when there is free capacity on the communication link in the current transmission interval.

12. The apparatus (10) of claim 12, wherein the first data transmissions use 64-Quadrature-Amplitude-Modulation and the second data transmissions use Quaternary-Phase-Shift-Keying modulation.

13. A method for a central unit (100) of one or more base station transceivers (300) of a mobile communication system, the base station transceiver (300) comprising the central unit (100) and a remote unit (200), the method comprising communicating (22) with at least two remote units (200; 202) using a communication link with a limited capacity; and separately scheduling (24), using at least two scheduling units (14a; 14b), data transmissions to and/or from a mobile transceiver (400) via the at least two remote units (200; 202), wherein the scheduling (24) is based on the limited capacity of the communication link between the central unit (100) and the remote unit (200).

14. A computer program having a program code for performing the method of claim 13, when the computer program is executed on a computer or processor.


**Patentansprüche**

1. Vorrichtung (10) für eine Zentraleinheit (100) von einem oder mehreren Basisstationstransceivern (300) eines Mobilkommunikationssystems, wobei der Basisstationstransceiver (300) die Zentraleinheit (100) und eine Ferneinheit (200) aufweist,
   wobei die Vorrichtung (10) für eine Zentraleinheit Folgendes aufweist:

   - ein Kommunikationsmodul (12), das funktionsfähig ist, mit der Ferneinheit (200) über eine Kommunikationsverbindung mit begrenzter Kapazität zu kommunizieren;
   - ein Scheduler-Modul (14), das funktionsfähig ist, Datenübertragungen zu und/oder von einem mobilen Transceiver (400) über die Ferneinheit (200) vorzugeben,
   wobei das Scheduler-Modul (14) funktionsfähig ist, die Vorgabe der Datenübertragungen auf der begrenzten Kapazität der Kommunikations-verbindung zwischen der Zentraleinheit (100) und der Ferneinheit (200) zu basieren,
   wobei das Kommunikationsmodul (12) funktionsfähig ist, mit mindestens zwei Ferneinheiten (200); 202) unter Verwendung der Kommunikations-verbindung mit der begrenzten Kapazität zu kommunizieren,
   wobei das Scheduler-Modul (14) mindestens zwei Scheduling-Einheiten (14a; 14b) zum separaten Vorgeben der mindestens zwei Ferneinheiten (200; 202) aufweist.

2. Vorrichtung (10) nach Anspruch 1,
   wobei die Zentraleinheit (100) mit mindestens zwei Ferneinheiten (200; 202) unter Verwendung der Kommunikationsverbindung gekoppelt ist.

3. Vorrichtung (10) nach Anspruch 1,
wobei die Datenübertragungen in sich wiederholenden Übertragungsintervallen organisiert sind,
wobei jede der mindestens zwei Scheduling-Einheiten (14a; 14b) funktionsfähig ist, während unterschiedlicher Übertragungsintervalle unterschiedliche Verkehrsraten zu erzeugen, so dass die Gesamtverkehrsrate der mindestens zwei Scheduling-Einheiten gleich der oder kleiner als die Kapazität der Übertragungsverbindung ist.

4. Vorrichtung (10) nach Anspruch 3,
wobei die mindestens zwei Scheduling-Einheiten (14a; 14b) funktionsfähig sind, die unterschiedlichen Verkehrsraten auf der Grundlage eines Verkehrs-ratenmusters erzeugen, das auf einer vorbestimmten Lastcharakteristik bei den mindestens zwei entfernten Einheiten (14a; 14b) basiert.

5. Vorrichtung (10) nach Anspruch 1,
wobei die Datenübertragungen in sich wiederholenden Übertragungsintervallen organisiert sind und wobei das Scheduler-Modul (14) funktionsfähig ist, die Übertragungskapazität in einem Übertragungsintervall durch Verschieben von einer oder mehreren Datenübertragungen zwischen den Übertragungsintervallen anzupassen.

6. Vorrichtung (10) nach Anspruch 5,
wobei das Scheduler-Modul (14) funktionsfähig ist, das Verschieben der einen oder mehreren Datenübertragungen zwischen den Übertragungsintervallen weiterhin auf einem Servicequalitätsziel der einen oder mehreren Datenübertragungen zu basieren.

7. Vorrichtung (10) nach Anspruch 5,
wobei das Scheduler-Modul (14) funktionsfähig ist, das Verschieben der einen oder mehreren Datenübertragungen innerhalb einer Gruppe von aufeinander folgenden Übertragungsintervallen auszuführen.

8. Vorrichtung (10) nach Anspruch 5,
wobei das Scheduler-Modul (14) funktionsfähig ist, Datenübertragungen von Nutzdaten zwischen Übertragungsintervallen zu verschieben, während Datenübertragungen von Steuerdaten und/oder Übertragungsdaten ohne Verschiebung belassen werden.

9. Vorrichtung (10) nach Anspruch 1,
die weiterhin ein Steuermodul aufweist, das funktionsfähig ist, die mindestens zwei Scheduling-Einheiten (14a; 14b) auf der Grundlage der begrenzten Kapazität der Kommunikationsverbindung zu steuern.

10. Vorrichtung (10) nach Anspruch 9,
wobei die Datenübertragungen in sich wiederholenden Übertragungsintervallen organisiert sind,
wobei das Steuermodul funktionsfähig ist, jedes der mindestens zwei Scheduling-Einheiten (14a; 14b) eine Basiskapazität aus der Kapazität der Kommunikationsverbindung zuzuweisen und eine Überschusskapazität aus der Kapazität der Kommunikationsverbindung zu reservieren,
wobei jede von den mindestens zwei Scheduling-Einheiten (14a; 14b) funktionsfähig ist, eine Übertragungskapazität in einem Übertragungsintervall durch Verschieben von einer oder mehreren Datenübertragungen zwischen einem aktuellen und einem nachfolgenden Übertragungsintervall anzupassen, und wobei das Steuermodul ferner funktionsfähig ist, zumindest einen Teil der Überschusskapazität einer Scheduling-Einheit (14a; 14b) zuzuweisen, wenn die Kapazität der Kommunikationsverbindung durch die Scheduling-Einheit (14a; 14b) in dem aktuellen Übertragungsintervall voraussichtlich überschritten wird.

11. Vorrichtung (10) nach Anspruch 1,
wobei die Datenübertragungen in sich wiederholenden Übertragungsintervallen organisiert sind,
wobei das Scheduler-Modul (14) funktionsfähig ist, erste Datenübertragungen und zweite Datenübertragungen vorzugeben,
wobei die ersten Datenübertragungen ein Modulationsschema verwenden, das mehr Informationen pro Modulationssymbol überträgt als die zweiten Datenübertragungen,
wobei das Scheduler-Modul (14) ferner funktionsfähig ist, eine erste Datenüber-tragung aus einem aktuellen Übertragungsintervall mit einer zweiten Datenüber-tragung aus einem späteren Übertragungsintervall auszutauschen, wenn die Kapazität der Kommunikationsverbindung in dem aktuellen Übertragungsintervall überschritten wird, oder
wobei das Scheduler-Modul (14) ferner funktionsfähig ist, eine zweite Datenübertragung aus einem aktuellen Übertragungsintervall mit einer ersten Datenübertragung aus einem späteren Übertragungsintervall auszutauschen, wenn auf der Kommunikationsverbindung in dem aktuellen Übertragungsintervall freie Kapazität vorhanden ist.

**12.** Vorrichtung (10) nach Anspruch 12,
wobei die ersten Datenübertragungen eine 64-Quadratur-AmplitudenModulation und die zweiten Datenübertragungen eine Quadratur-PhasenModulation verwenden.

**13.** Verfahren für eine Zentraleinheit (100) von einem oder mehreren Basisstationstransceivern (300) eines mobilen Kommunikationssystems,
wobei der Basisstationstransceiver (300) die Zentraleinheit (100) und eine Ferneinheit (200) aufweist,
wobei das Verfahren folgende Schritte umfasst:

- Kommunizieren (22) mit mindestens zwei Ferneinheiten (200; 202) unter Verwendung einer Kommunikationsverbindung mit einer begrenzten Kapazität umfasst; und
- getrenntes Vorgeben (24) von Datenübertragungen zu und/oder von einem mobilen Transceiver (400) über die mindestens zwei Ferneinheiten (200; 202), und zwar unter Verwendung von mindestens zwei Scheduling-Einheiten (14a; 14b),
wobei das Vorgeben (24) auf der begrenzten Kapazität der Kommunikations-verbindung zwischen der Zentraleinheit (100) und der Ferneinheit (200) basiert.

**14.** Computerprogramm mit einem Programmcode zum Durchführen des Verfahrens nach Anspruch 13, wenn das Computerprogramm auf einem Computer oder Prozessor ausgeführt wird.

**Revendications**

**1.** Équipement (10) destiné à une unité centrale (100) d'une ou plusieurs émetteurs-récepteurs (300) de station de base d'un système de communication mobile, l'émetteur-récepteur (300) de station de base comprenant l'unité centrale (100) et une unité distante (200), l'équipement d'unité centrale (10) comprenant :

un module de communication (12) opérable pour communiquer avec l'unité distante (200) par le biais d'une liaison de communication présentant une capacité limitée ;
un module d'ordonnancement (14) opérable pour ordonnancer des transmissions de données vers et/ou depuis un émetteur-récepteur mobile (400) via l'unité distante (100), selon lequel le module d'ordonnancement (14) est opérable pour se baser au niveau de l'ordonnancement des transmissions de données, sur la capacité limitée de la liaison de communication entre l'unité centrale (100) et l'unité distante (200), selon lequel le module de communication (12) est opérable pour communiquer avec au moins deux unités distantes (200; 202) par le biais de la liaison de communication présentant la capacité limitée ;
selon lequel le module d'ordonnancement (14) comprend au moins deux unités d'ordonnancement (14a; 14b) afin d'ordonnancer de manière séparée les au moins deux unités distantes (200; 202).

**2.** Équipement (10) selon la revendication 1, selon lequel l'unité centrale (100) est couplée à au moins deux unités distantes (200;202) par le biais de la liaison de communication.

**3.** Équipement (10) selon la revendication 1, selon lequel les transmissions de données sont organisées en intervalles répétés de transmission, selon lequel chacune des au moins deux unités d'ordonnancement (14a; 14b) est opérable pour générer des taux de trafic différents pendant des intervalles de transmission différents de sorte que un taux accumulé de trafic des au moins deux unités d'ordonnancement est égal, ou inférieur, à la capacité de la liaison de transmission.

**4.** Équipement (10) selon la revendication 3, selon lequel les au moins deux unités d'ordonnancement (14a;14b) sont opérables pour générer des taux de trafic différents sur la base d'un motif de taux de trafic, qui est basé sur une caractéristique de charge prédéterminée au niveau des au moins deux unités distantes (14a; 14b).

**5.** Équipement (10) selon la revendication 1, selon lequel les transmissions de données sont organisées en intervalles répétés de transmission et selon lequel le module d'ordonnancement (14) est opérable pour adapter une capacité de transmission dans un intervalle de transmission en décalant une ou plusieurs transmissions de données entre des intervalles de transmission.

**6.** Équipement (10) selon la revendication 5, selon lequel le module d'ordonnancement (14) est en outre opérable pour baser le décalage de l'une ou des plusieurs transmissions de données entre les intervalles de transmission sur un objectif de qualité de service pour l'une ou les plusieurs transmissions de données.

7. Équipement (10) selon la revendication 5, selon lequel le module d'ordonnancement (14) est opérable pour effectuer le décalage de l'une ou des plusieurs transmissions de données au sein d'un groupe d'intervalles de transmission consécutifs.

8. Équipement (10) selon la revendication 5, selon lequel le module d'ordonnancement (14) est opérable pour décaler des transmissions de données de données de charge entre des intervalles de transmission tout en laissant des transmissions de données de données de contrôle et/ou de diffusion non-décalées.

9. Équipement (10) selon la revendication 1, comprenant en outre un module de commande opérable pour commander les au moins deux unités d'ordonnancement (14a; 14b) sur la base de la capacité limitée de la liaison de communication.

10. Équipement (10) selon la revendication 9, selon lequel les transmissions de données sont organisées en intervalles répétés de transmission, selon lequel le module de commande est opérable pour attribuer une capacité de base à partir de la capacité de la liaison de communication à chacune des au moins deux unités d'ordonnancement (14a; 14b) et pour réserver une capacité excédentaire à partir de la capacité de la liaison de communication, selon lequel chacune des au moins deux unités d'ordonnancement (14a; 14b) est opératble pour adapter une capacité de transmission dans un intervalle de transmission en décalant une ou plusieurs transmissions de données entre un intervalle actuelle et un intervalle ultérieur de transmission, et selon lequel le module de commande est en outre opérable pour attribuer au moins une partie de la capacité excédentaire à une unité d'ordonnancement (14a; 14b) lorsque la capacité de la liaison de communication devra être dépassée par l'unité d'ordonnancement (14a; 14b) au sein de l'intervalle actuel de transmission.

11. Équipement (10) selon la revendication 1, selon lequel les transmissions de données sont organisées en intervalles répétés de transmission, selon lequel le module d'ordonnancement (14) est opérable pour ordonnancer des premières transmissions de données et des deuxièmes transmissions de données, selon lequel les premières transmissions de données utilisent un schéma de modulation qui transmet plus d'informations par symbole de modulation que les deuxièmes transmissions de données, selon lequel le module d'ordonnancement (14) est en outre opérable pour échanger une première transmission de données provenant d'un intervalle de transmission actuel avec une deuxième transmission de données provenant d'un intervalle de transmission ultérieur lorsque la capacité de la liaison de communication est dépassée au sein de l'intervalle actuel de transmission, ou selon lequel le module d'ordonnancement (14) est en outre opérable pour échanger une deuxième transmission de données provenant d'un intervalle de transmission actuel avec une première transmission de données provenant d'un intervalle de transmission ultérieur lorsqu'il existe de la capacité en trop sur la liaison de communication au sein de l'intervalle actuel de transmission.

12. Équipement (10) selon la revendication 12, selon lequel les premières transmissions de données mettent en œuvre une modulation d'amplitude en quadrature 64 et les deuxièmes transmissions de données mettent en œuvre la modulation par changement de phase quaternaire.

13. Procédé destiné à une unité centrale (100) d'une ou plusieurs émetteurs-récepteurs (300) de station de base d'un système de communication mobile, l'émetteur-récepteur (300) de station de base comprenant l'unité centrale (100) et une unité distante (200), le procédé comprenant la communication (22) avec au moins deux unités distantes (200; 202) par le biais d'une liaison de communication présentant une capacité limitée ; et l'ordonnancement séparé (24), par le biais d'au moins deux unités d'ordonnancement (14a; 14b), des transmissions de données vers et/ou depuis un émetteur-récepteur mobile (400) via les au moins deux unités distantes (200; 202), selon lequel l'ordonnancement (24) se base sur la capacité limitée de la liaison de communication entre l'unité centrale (100) et l'unité distante (200).

14. Programme d'ordinateur présentant du code de programmation pour effectuer la mise en œuvre du procédé selon la revendication 13, lorsque le programme d'ordinateur est exécuté par un ordinateur ou par un processeur.

Fig. 1

Communication
link

10

100

Remote Unit

200

Remote Unit

202

Fig. 2

Fig. 3

Fig. 4

Fig. 5

Fig. 6

**EP 2 739 105 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120236774 A

- EP 11306097